# EUROPEAN PATENT APPLICATION

(11) **EP 2 990 911 A1**
(43) Date of publication of application: **02.03.2016**
(21) Application number: 15182237.6
(22) Date of filing: 24.08.2015
(51) Int. Cl.: G06F 3/01

(54) **GESTURE-CONTROLLED COMPUTER SYSTEM**

(30) Priority: 29.08.2014 US 201462043728 P; 24.11.2014 US 201462083566 P; 23.06.2015 US 201562183385 P; 06.08.2015 US 201514819546
(71) Applicant: Hand Held Products, Inc., Fort Mill, SC 29707 (US)
(72) Inventor: BOUCHAT, Christopher, Morristown, NJ New Jersey 07962-2245 (US); SWAMY, Manjunatha Aswanthanarayana, Morristown, NJ New Jersey 07962-2245 (US)
(74) Representative: Houghton, Mark Phillip

(57) **Abstract**

A gesture-controlled computer system includes a mobile computing device, a range camera, and a gesture-control subsystem. The gesture-control subsystem is in communication with the mobile computing device and the range camera. The gesture-control subsystem includes a gesture-capturing module that is configured for acquiring a first-taken range image of an articulating-gesture-controller. The gesture-control subsystem also includes a range-image-analysis module configured for generating a gesture-data-point profile derived at least in part from the first-taken range image. The gesture-data-point profile includes information regarding a plurality of gesture data points, including information about the relative position of the gesture data points. The gesture-control subsystem also includes a gesture-recognition module configured for (i) receiving the gesture-data-point profile from the range-image-analysis module, (ii) mapping the gesture-data-point profile to a corresponding device command, and (iii) transmitting the corresponding device command to the mobile device for execution of the device command by the mobile device.

## Description

### CROSS-REFERENCE TO RELATED APPLICATIONS

The present application claims the benefit of U.S. Patent Application No. 62/043,728 for a *Gesture-Controlled Computer System* filed August 29, 2014. The present application claims the benefit of U.S. Patent Application No. 62/083,566 for a *Gesture-Controlled Computer System* filed November 24, 2014. The present application claims the benefit of U.S. Patent Application No. 62/183,385 for a *Gesture-Controlled Computer System* filed June 23, 2015. Each of the foregoing patent applications is hereby incorporated by reference in its entirety.

### FIELD OF THE INVENTION

The present invention relates tocomputer systems. More specifically, the present invention relates to a gesture-controlled computer system, and a gesture-based method for controlling a computer system.

### BACKGROUND

Many businesses increasingly rely on mobile computing devices (e.g., portable computing devices) to provide computer resources to their employees, particularly employees whose job responsibilities require them to be on the move. For instance, package delivery companies frequently equip employees with mobile computing devices that allow the transport and delivery of packages to be tracked in real-time by user-input data. A warehouse worker may also utilize a forklift's integrated mobile computing device to track inventory stored in the warehouse, and to quickly determine the location of stored items to be transported using the forklift. Many of these mobile computing devices incorporate indicia-reading technology to enable efficient and accurate data entry.

Earlier mobile computing devices frequently received input through integrated keyboards. The keyboards were often miniaturized, at least to some extent, to maintain the portability of the mobile computing device. Integrated mouse technology, sometimes in the form of an integrated track ball or similar peripheral device, was also used to assist with receiving commands from the user. More recently, touchscreens have been incorporated to integrate device input and device display. While touchscreens are beneficial in maintaining the portability of the device and facilitating user input, there are instances where touchscreen input can be problematic.

While medical providers, such as hospitals, have come to rely on mobile computing devices, including indicia readers, to assist doctors and nurses as they make their rounds from patient to patient, hospitals remain concerned about the transmission of germs. Because touchscreens require tactile interaction between the user and the device, touchscreens tend to transmit germs interpersonally when operated by more than one user.

The spread of germs and other contaminants is also of particular concern to the food industry. Restaurant workers may find it difficult or cumbersome to maintain clean hands while performing tasks that involve both handling food and operating computer-based systems (e.g., kitchen display systems, point-of-sale systems, etc.).

Some jobs require an employee to wear gloves. Employees that work in extremely cold environments (e.g., cold climates or refrigerated environments) use gloves to maintain hand warmth. Harsh or hazardous work environments, such as where workers handle chemicals or sharp materials, may also require workers to use protective gloves. Touchscreen devices tend to perform poorly, if at all, when the user is wearing gloves.

Therefore, a need exists for a computer system capable of touchless control. In particular, a need exists for a computer system that can be controlled by gestures performed by a user and recognized by the system.

### SUMMARY

Accordingly, in one aspect, the present disclosure embraces a gesture-controlled computer system. The gesture-controlled computer system includes a mobile computing device, a range camera, and a gesture-control subsystem. The gesture-control subsystem is in communication with the mobile computing device and the range camera. The gesture-control subsystem includes a gesture-capturing module that is configured for acquiring a first-taken range image of an articulating-gesture-controller during the performance of a gesture. The gesture-control subsystem also includes a range-image-analysis module configured for generating a gesture-data-point profile derived at least in part from the first-taken range image. The gesture-data-point profile includes information regarding a plurality of gesture data points, including information about the relative position of the gesture data points. The gesture-control subsystem also includes a gesture-recognition module configured for (i) receiving the gesture-data-point profile from the range-image-analysis module, (ii) mapping the gesture-data-point profile to a corresponding device command, and (iii) transmitting the corresponding device command to the mobile device for execution of the device command by the mobile device.

In one embodiment, the gesture-capturing module is configured for acquiring a second-taken range image of the articulating-gesture-controller during the performance of a gesture. The range-image-analysis module is also configured for including in the gesture-data-point profile information regarding the relative motion of the plurality of gesture data points, the relative motion being determined at least in part by comparing the first-taken range image to the second-taken range image.

In another embodiment, the information regarding the relative motion of the plurality of gesture data points includes the direction of movement and velocity of the plurality of gesture data points.

In yet another embodiment, the gesture-data-point profile includes information regarding the orientation of the articulating-gesture-controller.

In yet another embodiment, the gesture-data-point profile includes information regarding the positional configuration of a plurality of positionable segments of the articulating-gesture-controller.

In yet another embodiment, the gesture-data-point profile includes information regarding the positional configuration of at least three positionable segments of the articulating-gesture-controller.

In yet another embodiment, the gesture-data-point profile includes information regarding the positional configuration of at least four positionable segments of the articulating-gesture-controller.

In yet another embodiment, the gesture-data-point profile includes information regarding the positional configuration of at least five positionable segments of the articulating-gesture-controller.

In yet another embodiment, the articulating-gesture-controller is a human hand, and each of the plurality of positionable segments is a different finger of the human hand.

In yet another embodiment, the articulating-gesture-controller is a portion of a human upper torso, and each of the plurality of positionable segments corresponds to a different one of an upper arm, a lower arm, a hand, or one of the fingers of the hand.

In another aspect, the present disclosure embraces a method for controlling a mobile computer device. A gesture is presented within a range camera's field-of-view using an articulating-gesture-controller. A first-taken range image of the articulating-gesture-controller is acquired. A gesture-data-point profile derived at least in part from the first-taken range image is acquired. The gesture-data-point profile includes information regarding a plurality of gesture data points, including information about the relative position of the gesture data points. The gesture-data-point profile is mapped to a corresponding device command. The corresponding device command is transmitted to the mobile computing device for execution of the device command by the mobile computing device.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

Figure 1 is a block diagram illustrating a gesture-controlled computer system according to the present disclosure.
Figures 2A-2C areillustrations of an exemplary articulating-gesture-controller presenting, in each figure, a separate exemplary gesture while positioned within an exemplary range camera's field-of-view according to the present disclosure.

### DETAILED DESCRIPTION

The present disclosure embraces a gesture-controlled computer system. The gesture-controlled computer system utilizes a gesture-control subsystem to permit a user to command a mobile computing device using gestures that are recognizable by the gesture-control subsystem. The gestures are made with an articulating-gesture-controller.

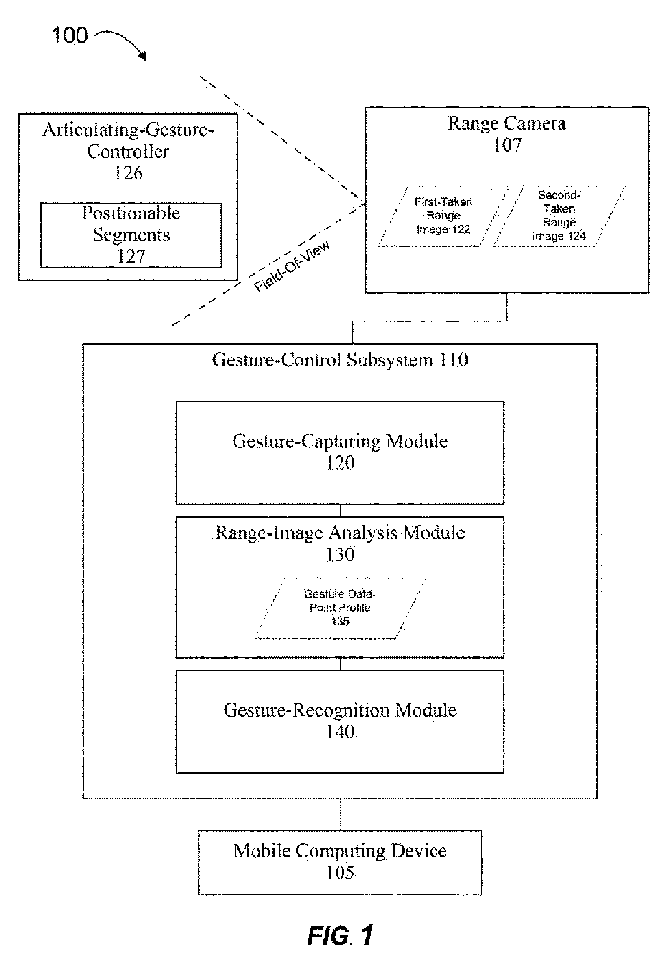

As shown in Figure 1, the gesture-controlled computer system 100 includes a mobile computing device 105. Without intending to limit the disclosure, the mobile computer device 105 may be a tablet computer, a smartphone, a wearable computer, a vehicle-mounted computer, a portable indicia reader (e.g. barcode scanner), a portable RFID reader, or similar computerized portable device controlled at least in part by commands initiated by a user. Typically, the mobile computing device 105 includes a processor (e.g., computer processor, central processing unit, etc.) for executing instructions. Typically the instructions are included in software (e.g., executable software, software code, source code, etc.) that is stored in a memory store (e.g., computer memory). It will be understood by a person of ordinary skill in the art that instructions may also be included in part of the mobile computing device's hardware. The mobile computing device's memory store may include non-volatile and volatile types of memory, including hard drives, read-only memory (ROM), random-access memory (RAM), and removable memory (e.g., removable flash memory). Typically, an operating system is stored in the memory store and manages the hardware and software of the mobile computing device 105. Typically, the processor is in communication with the other components of the mobile computing device 105 via a bus.

The gesture-controlled computer system 100 also includes a range camera 107. For the purposes of this disclosure, a range camera includes any three-dimensional imaging device that is capable of depicting the three-dimensional space within the range camera's field-of-view in the form of a two-dimensional image. The two-dimensional image that provides a representation of the three-dimensional space, including representations of objects within that three dimensional-space, is typically a digital image (e.g., a computer-readable image file). An image acquired by the range camera 105 is referred to as a range image. Typically, the range image associates each image pixel with a distance value. Typically, the association of an image pixel with a distance value provides an indication of the distance of the portion of the object represented by the image pixel from the range camera. The image pixel may display differently (e.g., on a display device) depending upon the associated distance value.

The range camera 107 may employ any of a variety of techniques for generating a range image. Without intending to limit the disclosure, examples of such techniques include stereo triangulation using a stereo camera system, sheet of light triangulation, structured light illumination, time-of-flight, interferometry, ultrasound, passive infrared, and coded aperture techniques. The range camera 107 may include more than one image-capturing device (e.g., camera).

Typically, the range camera 107 may be configured to allow a user to adjust the settings of the range camera 107. For example, the system may include a configuration utility that allows a user to change the range camera's settings, including frame rate, resolution, filter settings, range settings, etc. The configurable nature of the range camera 107 allows a user to obtain the best quality images for promoting the system's ability to recognize gestures.

The gesture-controlled computer system 100 also includes a gesture-control subsystem 110. The gesture-control subsystem 110 is in communication (e.g., electronic communication, wireless communication, etc.) with the mobile computing device 105 and range camera 107. For example, the gesture-control subsystem 110 is typically configured to receive range images from the range camera 107 and transmit device commands to the mobile device 105. The gesture-control subsystem 110 typically includes software (e.g., application software) stored in a memory store, the software being executable by a processor for carrying out the functions of the gesture-control-subsystem 110.

The-gesture-control subsystem 110 may be integral with the mobile computing device 105 and/or the range camera 107. In one embodiment, the mobile computing device 105 features an integrated range camera 107 and gesture-control subsystem 110. Alternatively, the gesture-control subsystem 110 may be, in whole or in part, remote from the mobile computing device 105 and/or the range camera 107. For example, the mobile computing device 105 may have an integrated range camera 107 to take a range image of the user's gestures. The range image(s) may be transmitted via a communications network (e.g., local area network, wide area network, personal area network, Internet, etc.) to a remote server computer that hosts the gesture-control subsystem 110 (or aspects thereof) for processing. The various components of the system 100 may be connected to the communications network via wired or wireless technology.

The gesture-control-subsystem 110 includes a gesture-capturing module 120. The gesture-capturing module 120 is configured for acquiring a first-taken range image 122 of an articulating-gesture-controller 126. (References in this disclosure to a first-taken range image should be understood to mean a range image that depicts the range camera's field-of-view at a point in time that is prior to the point in time depicted in a second-taken range image. A second-taken range image depicts a point in time prior to a third-taken range image, and so on.)The first-taken range image 122 is typically acquired by the range camera 107 by positioning the articulating-gesture-controller 126 within the field-of-view of the range camera 107. Typically, the gesture-capturing module 120 receives the first-taken range image 122 (e.g., a range image in the form of an electronic signal or a computer-readable image file) from the range camera 107. The gesture-capturing module 120 usually stores the first-taken range image 122 in the memory store, where it can be accessed for processing purposes.

The articulating-gesture-controller (AGC) 126 is utilized by a user of the gesture-controlled computer system 100 to make a gesture to control the gesture-controlled computer system 100. Typically, the AGC includes a positionable segment 127. More typically, the AGC includes a plurality of positionable segments 127. A positionable segment 127 is a portion of the AGC that can be configured by the user in more than one physical configuration (e.g., an extended position, a retracted position, a semi-retracted position, a rotated position, a curled position, etc.). The positionable segments 127 allow the AGC to be configured in multiple physical configurations, thereby enabling the user to create multiple different gestures. In addition, one or more positionable segments 127 may be moved, alone or in conjunction with the entire AGC, as a gesture. In other words, the gesture may be defined at least in part by the configuration of one or more positionable segments 127 and/or by the relative motion of one or more positionable segments 127.

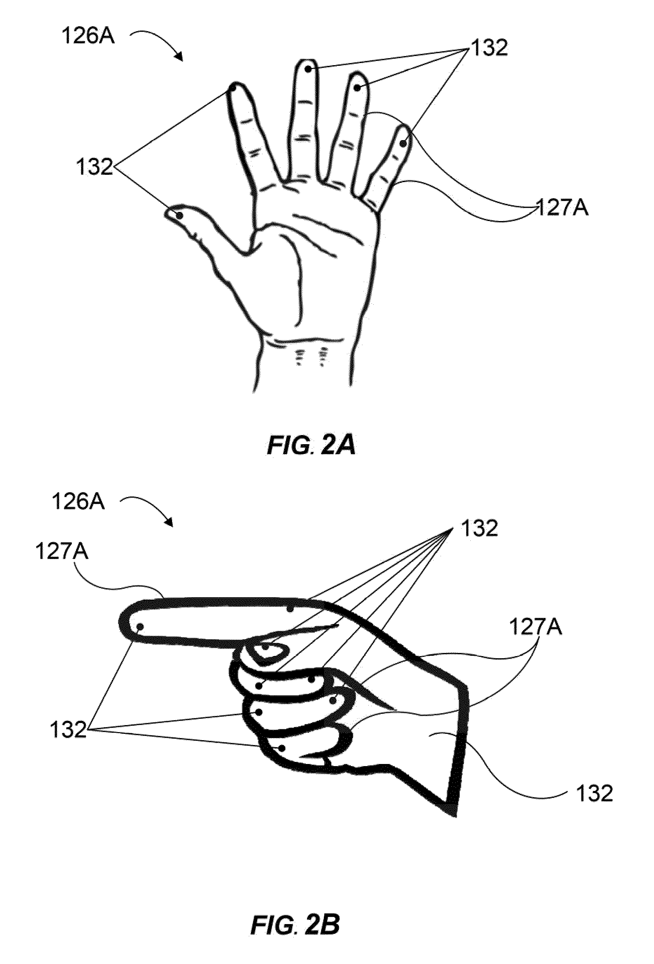

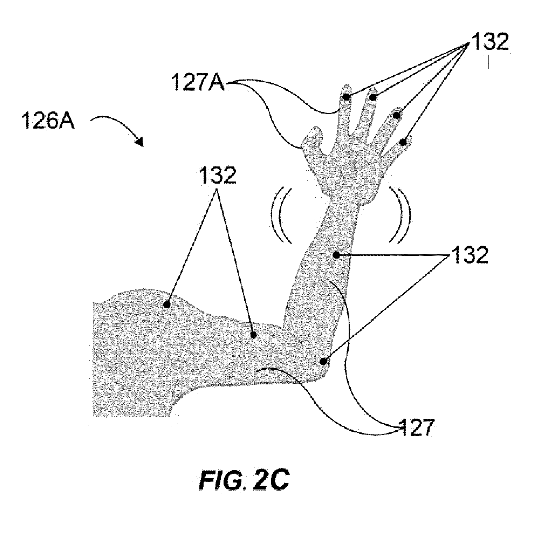

As shown in Figures 2A-2C, in one embodiment of the gesture-controlled computer system 100 according to the present disclosure, the AGC is a human hand 126A. To perform a gesture to control the mobile device 105, the user positions the human hand 126A within the field-of-view of the range camera 107, which captures a first-taken range image of the human hand 126A. Exemplary positionable segments may include the fingers 127A of the human hand 126A. For example, the user may extend the forefinger while leaving the remaining fingers retracted (e.g., curled up in a fist configuration) to represent one gesture. By way of further example, the user may extend the forefinger and thumb while leaving the remaining fingers retracted to represent a different gesture.

As discussed below, the gesture-controlled computer system 100 can, in one embodiment, recognize the motion of objects within the field-of-view of the range camera. The ability to recognize motion greatly increases the richness of the system's gesture vocabulary. In other words, by allowing the user to incorporate motion into gestures, the system provides an ability to recognize a much larger number of gestures than could be utilized without this ability.

As an example of a gesture that incorporates motion, a user may extend and then retract a finger 127A, which the system may recognize as a gesture that is distinct from a hand with an extended, motionless finger. By way of further example, the user may move the entire human hand 126A within the field-of-view of the range camera 107. The system may associate different gestures depending upon the direction of movement. For example, moving the human hand 126A upward may be associated with one gesture, and moving the human hand 126A downward may be associated with a different gesture. Similarly, moving the human hand 126A toward the range camera 107 may be associated with a different gesture from the gesture associated with moving the human hand 126A away from the range camera. The system may associate unique movements with a particular gesture. For example, moving the human hand 126A in a circular motion may represent a distinct gesture.

As stated above, the multi-configurability of the AGC 126, combined with the system's ability to recognize motion as a distinct element of a given gesture, allows for a rich vocabulary of gestures. The previous example of a circular hand movement can be used to illustrate this richness. Depending upon whether zero, one, two, three, four, or five fingers of the human hand were extended at the time of the circular hand motion, the user has the ability to create at least six distinct gestures based on that one motion alone. Additional gestures could be created using the same circular hand motion by incorporating movement of one or more fingers at the same time. For example, moving the entire human hand in a circular motion while continuously extending and retracting all five fingers could represent a distinct gesture.

It will be appreciated by a person of ordinary skill in the art that there are a large number of gestures that could be created (e.g., performed) utilizing an AGC 126 according to the present disclosure. The exemplary gestures described herein are for illustrative purposes only, and are not intended to limit the type or number of gestures that may be performed using the AGC 126, nor are they otherwise intended to limit the present disclosure.

Similarly, the description of a human hand 126A as an exemplary AGC 126 is not intended to limit the disclosure to a particular type of AGC 126. For instance, the AGC could also be a robotic hand or other inanimate object having the characteristics of an AGC 126 as disclosed herein. The AGC 126 could also be another portion of the human body. For example, the AGC 126 could be a portion of a human upper torso. Typically, this would allow the user to perform a gesture using, for example, an arm. Exemplary positionable segments in this exemplary scenario could be an upper arm, a lower arm, a hand, or one of the fingers of the hand. An exemplary gesture that a user could perform would be extending the upper arm horizontally and moving the lower arm back-and-forth in a substantially vertical position with only the thumb and little finger of the hand extended and the remaining fingers in a retracted position.

An exemplary AGC may also incorporate aspects of the human body (e.g., human hand) and an inanimate object (e.g., stylus). For example, a user may perform various gestures depending on the positioning of both the user's hand(s) and/or finger(s) as well as the position or location of a stylus within the user's hand (e.g., positioning the stylus between the thumb and first finger is one gesture, and positioning the stylus between the fourth and fifth fingers is another gesture).Similarly, an exemplary AGC may incorporate more than one body part (e.g., two hands) that the user can use to perform coordinated gestures (e.g., displaying two closed fists is a single gesture). In other words, an exemplary AGC may include two or more distinct objects that can be displayed together to perform gestures.

Returning now to Figure 1, the system according to the present disclosure also includes a range-image-analysis module 130. The range-image-analysis module 130 is configured for generating a gesture-data-point profile 135. The gesture data-point profile 135 contains information that is derived at least in part from the first-taken range image. The gesture-data-profile includes information about the relative position of the range image's gesture data points 132. A gesture data point 132 is a discrete portion of a range image (e.g., a pixel) that the system associates with a corresponding discrete portion of the AGC 126 (e.g., a palm, a finger, a fingertip, a first knuckle of a forefinger, a second knuckle of a forefinger). Typically, the number of gesture data points 132 will be equal to or less than the number of pixels in the range image. More typically, the system will create far fewer gesture data points 132 than the number of pixels in the range image. For example, the ratio of gesture data points to range image pixels may be less than about 1-to-100 (e.g., between about 1-to-1000 and 1-to-10,000). In this way, the gesture data points 132 are typically a representative sampling of the image pixels that make up a range image. Creating and utilizing gesture data points 132 instead of an entire range image allows the most relevant information in the range image to be stored and processed in a more efficient manner (e.g., the memory requirements for storing a collection of gesture data points 132 is far less than the memory requirements for storing a typical range image).

Typically, the system creates gesture data points 132 that are associated with distinct features of the AGC 126 that are utilized in the presentation of different gestures. For example, where the AGC 126 is a human hand, the system may associate one gesture data point with each of the five fingers. The system may optionally associate a gesture data point 132 with the palm of the hand. By establishing one gesture data point for a palm and one gesture data point for each of the five fingers, the system is able to determine the relative position of each of these component parts. For example, the system in this exemplary embodiment would be able to determine whether the little finger was above or below the middle finger in the three-dimensional space that is represented by the range image. The system would similarly be able to determine, by comparing the position of the palm gesture data point with the finger gesture data points, whether the hand was extended toward or away from the range camera.

It will be appreciated by a person of ordinary skill in the art that the greater number of gesture data points 132 that the system associates with the AGC 126, the greater the system's ability to distinguish between gestures having refined differences. For example, to distinguish between a finger that is extended versus one that is retracted, the system may need to assign one gesture data point to each of the finger's three joints (e.g., first knuckle, second knuckle, and third knuckle). Greater numbers of gesture data points 132 may be created to resolve even subtle differences between gestures (e.g., a cupped hand versus a flat hand). However, the employment of more gesture data points 132 may come at the expense of system efficiency (e.g., in terms of memory usage and processing time).

The gesture-data-point profile 135 includes information regarding all of the gesture data points 132 recognized by the range-image-analysis module 130. The information may typically include the position of the gesture-data-point 132 in the three-dimensional space captured by the range camera 107, as well as any additional information required to determine position of each gesture data point 132 vis-à-vis other gesture data points 132. Furthermore, the gesture-data-point profile 135 may include information from which the system could determine the position, orientation, and or movement of the AGC 126 and/or its positionable segments 127. Typically, the gesture-data-point profile 135 is included in an electronic data file that is processed by the system in lieu of processing a larger, more electronically-cumbersome range image (e.g., range image electronic image data file).

The system also includes a gesture-recognition module 140. The gesture-recognition module 140 is configured for (i) receiving the gesture-data-point profile 135 from the range-image-analysis module 130, (ii) mapping the gesture-data-point profile 135 to a corresponding device command, and (iii) transmitting the corresponding device command to the mobile computing device for execution of the device command by the mobile computing device.

Typically, the system stores in non-volatile memory a library of gestures (e.g., a gesture library). The gesture library contains information regarding each of the gestures that are recognizable by the system. Typically, this information includes information regarding the relative position and relative motion, if any, of the gesture-data-points that make up a given gesture. To identify what gesture is represented by a given gesture-data-point profile 135, the gesture-recognition module 140 compares the gesture-data-point profile 135 to the gesture-data-point profiles stored in the gesture library. If a gesture-data-point profile stored in the gesture library matches the gesture-data-point profile 135 received from the range-image-analysis module 130, then the gesture-recognition module 140 maps the recognized gesture to the device command that corresponds with the matching gesture in the gesture library. The gesture-recognition module 140 then transmits the device command that corresponds to the recognized gesture to the mobile computing device 105 for execution of the device command by the mobile computing device 105. A device command may represent be a unitary command, or it may be a multi-step command. In other words, a device command may, in certain embodiments of the present disclosure, instruct the mobile computing device 105 to take a series of actions in a specified order. The system may require, for example, that a user perform a unique gesture (e.g., a security gesture or login gesture) to access the system. The login gesture may be in lieu of, or in addition to, traditional login techniques such as alphanumeric passwords.

In an exemplary embodiment, the system acquires a second-taken range image 124 to allow the system to determine the motion of the AGC and/or any constituent positionable segments 127. The gesture-capturing module 120 is configured for acquiring a second-taken range image 124 depicting the AGC 126. Using image-motion-processing techniques, the system compares aspects of the first-taken range image 122 with aspects of the second-taken range image 124 to determine what portions, if any, of the AGC 126 moved between the time of the first-taken range image 122 and the time of the second-taken range image 124. Typically, the comparison of the first-taken range image 122 with the second-taken range image 124 includes a comparison of the gesture-data-points 132 associated with each range image. The resulting information regarding the movement depicted in the range images is typically incorporated in the gesture-data-point profile 135 that the system uses to identify the gesture being presented to the range camera 107.

It will be appreciated by a person of ordinary skill in the art that the system may acquire multiple range images to assist in determining the particular kinetic motion that may be exhibited by the AGC 126. For example, the system may acquire and process twenty-four range images per second to determine the movements of the AGC 126 and/or its constituent positionable segments 127. It will also be appreciated that the system may through analysis acquire information regarding not only the direction of motion of the AGC 126 and/or the positionable segments 127, but also the velocity associated with the motion. In this way, the system can potentially distinguish between gestures (or gesture components) presented at differing speeds. For example, the system may identify a slower-waving hand as a gesture distinct from a gesture represented by a faster-waving hand.

The gesture-controlled computer system 100 according to the present invention may have a pre-populated gesture library. In other words, the system may be configured to recognize at least one gesture without the need for any initialization by the user. In one embodiment, the system is configured to allow the user to customize (e.g., through a "learning mode") the gesture library. To customize the gesture library, the user performs the gesture (which may include a series of discrete positionings and/or movements of the AGC) to allow the gesture-control subsystem 110 to create a gesture-data-point profile that represents the gesture to be added to the gesture library. The user then associates the newly-added gesture with a device command, for example by manually executing the device command using another input on the mobile computing device (e.g., a keyboard, a touchscreen, a mouse, etc.). The system subsequently stores in the gesture library the association between the new gesture and the device command input by the user. This customization feature effectively allows a user to create a customized library of gestures (e.g., a language of gestures), each gesture associated with a different device command.

In addition to allowing the user to add new gestures to the gesture library, the system may also allow a user to dynamically change the association (e.g., mapping) between a particular gesture and a device command. If a given gesture is associated with a first device command, for example, the user may direct the system to associate that gesture with a second, different device command. Furthermore, the system may allow a user to map more than one device command to a given gesture. The device command that is actually executed is typically determined by the context in which the gesture is performed. In other words, in cases where more than one device command is mapped to a single gesture, when that gesture is performed the system executes the device command that is appropriate given the present status of the workflow. The system is typically configured to allow the user to map these device commands to gestures in the field, thereby providing significant flexibility to the user.

In another exemplary embodiment, the system 100 is configured to allow a user to create a digital signature by performing a signature gesture within the range camera's field of view. For example, to sign for the receipt of a package, a package recipient could be instructed by the system user to mimic the movements used in signing the recipient's name. The alternative embodiment of the system is configured to track the movements of at least a portion of the recipient's hand to acquire the recipient's electronic signature. Alternatively, the system is configured to track the movements of at least a portion of a stylus that the signing package recipient manipulates (e.g., holds while moving the hand) in a signature movement.

In another exemplary embodiment, the system 100 may permit the initiation of device commands via a combination of gestures and other input techniques. For example, a user may initiate a device command by performing a gesture before, during, or after providing a voice command received through the system's microphone.

In another exemplary embodiment, the gesture-control subsystem 110 is configured for initiating a device command associated with a given gesture upon the user's performance of an execution signal. Typically, an execution signal is a gesture (e.g., hand gesture), such as a stationary closed fist, or open hand closing into a closed fist. In other words, after recognizing a gesture associated with a particular device command, the system may not actually initiate the device command until the system recognizes that an execution signal has been performed. Typically, the execution signal is performed immediately subsequent to the gesture (e.g., command gesture). For example, after a user performs a gesture, she may perform an execution signal indicating that she now wishes the system to initiate the device command associated with the performed gesture. The execution signal may also be a voice command from the user. For example, the user may perform and gesture and then, when satisfied that the system has recognized the correct gesture, say "execute", thereby causing the system to initiate the associated device command.

In this way, the system's ability to identify an execution signal allows the user to control whether or not the system performs the device command associated with the gesture as recognized by the system. This feature advantageously allows the user to have greater control over when the device command is initiated. For example, if the system indicates to the user that it has recognized the gesture to be something other than what the user expected (e.g., the user swiped two fingers to the left and the system indicated it recognized three fingers swiping to the left), the user can prevent the initiation of an undesired device command by not performing an execution signal. The user may repeat the gesture until the gesture is recognized by the system as the user intended, at which time the user may perform an execution signal to indicate to the system that system should execute the device command associated with the last-recognized gesture.

In another exemplary embodiment, the gesture-control subsystem 110 is configured for ignoring a gesture (or partial gesture) that precedes (e.g., immediately precedes) a user's performance of a cancellation signal. When the gesture-control subsystem detects that the user has performed a cancellation signal, the system disregards the gesture or partial gesture that the user was performing just prior to the cancellation signal. The cancellation signal may be a gesture (e.g., hand gesture), a user-spoken command, or other type of input (e.g., pressing a button). For example, if a user performs half of a desired gesture and then decides to initiate a different command or no command, the user can restart the process by performing the cancellation signal. The cancellation signal prompts the system to disregard the previous gesture attempt and prepare for a new gesture. A typical cancellation signal may include moving the AGC 126 away from the range camera 107 until it is out of the nominal range. In other words, where the system may typically recognize gestures performed within a certain distance range from the range camera (e.g., within a specified z-coordinate range), when the user moves the AGC 126 outside of that range, the system will recognize that as a cancellation signal.

In another exemplary embodiment, the system 100 is configured to recognize gestures only when certain conditions are met. For example, the user may toggle between a gesture mode and a standard input mode (e.g., entering device commands through other input devices such as a keyboard, a touchscreen, a microphone, etc.). Alternatively, the system 100 may automatically enter into gesture mode under certain conditions. For example, the system 100 may be configured to enter gesture mode only when a specific, triggering gesture is presented by the user. For example, when a user makes a gesture that includes extending three fingers, the system 100 enters gesture mode. When less than two fingers are extended, however, the system 100 stays in mouse mode. In mouse mode, the user's hand and/or finger movements can be used to control the mobile computing device's display screen in a manner similar to as if a touchscreen or trackpad were being used. Alternatively, the system 100 automatically enters gesture mode when the system detects the presence of an AGC at predetermined distance (e.g., greater than three inches) from the range camera. In this way, the system 100 can be configured to allow conventional touchscreen input when a user's hand is close to the mobile computing device's display screen, but to automatically switch to gesture mode when the user's hand is not determined to be close to the display screen.

In another exemplary embodiment, the system 100 may be configured for providing the user with a visual representation of the device command initiated by the user's performance of a recognized gesture. The mobile computing device's display (e.g., LCD display) may provide onscreen visualization of inputted device commands using a combination of dynamic cursors and/or backgrounds. The system may also provide the user with audio (e.g., aural) feedback to indicate events such as gesture start, gesture end, and change of modes (e.g., from gesture mode to mouse mode). In this regard, the system 100 may include a user-feedback module 145 for providing gesture-related feedback to a user in response to the performance of a gesture.

The gesture-related feedback provided by the user-feedback module may include an identification of the performed gesture. In other words, the gesture-related feedback may identify for the user the specific gesture recognized by the system when the user performed a particular gesture. By providing gesture-related feedback, the system enables the user to determine whether or not the system is appropriately recognizing the performed gesture and/or to determine whether the user is appropriately performing the desired gesture.

The gesture-related feedback may include a visual response (e.g., graphic response or output). For example, if a user holds up two fingers and swipes them to the right, the user-feedback module 145 may cause the system's display screen (e.g., LCD monitor) to display "2→". By viewing this visual output, the user may confirm that the system properly understood (e.g., identified) the performed gesture. Alternatively, the visual response may include the illumination of a light or the illumination of a light in a particular manner (e.g., a pre-determined on-off sequence and/or duration, a pre-determined color or sequence of colors, etc.).

The gesture-related feedback may include an aural response (e.g., audio response or output). For example, if a user points her little finger toward the range camera and then moves her little finger in a circular manner, the user-feedback module may cause the system's speaker to emanate a particular sound associated with that gesture (e.g., three tones in series). The sound associated with a particular gesture may include a voice recording. The voice recording may state the nature of the performed gesture (e.g., "little finger in circular motion") or, more typically, it may state the command associated with the performed gesture (e.g., "go to main menu").

In an alternative embodiment, the gesture-controlled computer system according to the present disclosure includes a performance module 150. The gesture performance module 150 is configured to analyze the user's performance of a gesture to determine how well the user is performing the gesture. This analysis can allow the system to detect instances when the user is performing a gesture(s) inappropriately, thereby presenting an opportunity to correct the user's performance. For example, at the beginning of a work shift, a user may perform a given gesture appropriately, such as through the use of substantially precise movements. As the shift wears on, fatigue may cause the user to use less precise movements in the performance of a gesture. When a user performs a gesture improperly, it may result in unwanted delays as the system attempts to recognize the gesture. By detecting when a user is performing a gesture improperly (e.g., imprecisely, sloppily, etc.), the performance module 150 can either notify the user (e.g., through a graphic display or audio signal) to improve the performance of the gesture, or it can notify a third party that is responsible for the user's performance (e.g., a manager). Additionally, the performance module's analysis can provide insight into the nature and timing of worker fatigue. If the performance module 150 detects a pattern of gestures that are impeded by fatigue, it may prompt management to consider and potentially remedy the cause of the fatigue. For example, the fatigue may be caused by a gesture that requires too great a degree of dexterity and/or endurance to be performed repeatedly over the course of an entire work shift. An alternative, less taxing gesture may need to be considered. This ability for the performance module 150 to detect fatigue may be used generally to determine when a user (or entire workforce) becomes fatigues, and to take appropriate measures to reduce the impact of the fatigue (e.g., better timing of breaks).

In an alternative embodiment, the system 100 includes an articulating-gesture-controller-identifier module 155. The articulating-gesture-controller-identifier module 155 identifies an articulating-gesture-controller within a range image. Typically, the articulating-gesture-controller-identifier module 155 employs traditional image analysis algorithms (e.g., edge detection algorithms, curve detection algorithms, etc.) in determining whether a particular range image includes an image of an AGC, including a human hand. Typically, the articulating-gesture-controller-identifier module 155 includes a series of templates matching an AGC in various configurations (e.g., open hand seen from the top, closed hand seen from the side, partial palm, etc.). One technique involves identifying whether the range image includes fingertips. Although this technique is generally effective, it may be prone to false identifications because other objects may initially appear to be fingertips. This technique may be refined by applying a cascading system of AGC identification. Using this cascading technique, the articulating-gesture-controller-identifier module 155 first analyzes the range image to determine the presence of a shape consistent with a human hand. When a human hand is identified, the articulating-gesture-controller-identifier module 155 then looks for fingertips. By initiating a search for fingertips only after identifying, for example, a shape consistent with a hand, the system avoids devoting resources to a search for fingertips, which can consume substantial amounts of time and/or processing power.

In another aspect, the present disclosure embraces a gesture-controlled computer system that includes a wearable-gesture-controller. The wearable-gesture-controller is configured to detect a user's movements (e.g., through integrated accelerometers) in lieu of, or supplementary to, a range camera. The wearable-gesture-controller may, for example, take the form of a ring that can be worn on the user's finger. The ring can detect movements in the user's hand and/or finger. The user can, therefore, perform gestures using the hand bearing the ring, which gestures may be identified and acted upon according to the systems and methods disclosed herein.

In another aspect, the present disclosure embraces a method for controlling a mobile computing device. A gesture is presented (e.g., made, created, etc.) using an articulating-gesture-controller. The gesture is presented within a range camera's field-of-view. A first-taken range image of the articulating-gesture-controller is acquired. The first-taken range image depicts the articulating-gesture-controller during the performance of the gesture. A gesture-data-point profile is generated. The gesture-data-point profile is derived at least in part from the first-taken range image. The gesture-data-point profile includes information regarding a plurality of gesture data points, including information about the relative position of the gesture data points. The gesture-data-point profile is mapped to a corresponding device command. The corresponding device command is transmitted to the mobile computing device for execution of the device command by the mobile computing device.

In another aspect, the present disclosure embraces a gesture-controlled kitchen display system. The food industry, and in particular the restaurant industry, has in recent years largely moved toward the utilization of kitchen display systems (e.g., kitchen automation system). Traditionally, the provision of restaurant services relied heavily upon paper transactions. A food server would write down a patron's order and submit the written order to the food preparers (e.g., cooks). The written order, or a carbon copy of the written order, would also be used at the point-of-sale to determine the amount owed by the customer.

As technology evolved, the restaurant industry looked to ways to reduce reliance on written orders, which can be costly and inefficient. Ultimately the industry turned to kitchen display systems. Kitchen display systems are computer-based (e.g., processor-driven) systems that permit electronic processing of food orders and payment. Rather than providing the food preparers with a written order (e.g., a ticket), the server enters the order into the kitchen display system via a user input (e.g., keyboard, mouse, touchscreen, etc.). Food preparers view the orders on a display device (e.g., LCD monitor). When the food preparer finishes making the food, he or she can indicate that the order is ready by selecting an input on the kitchen display system.

Because traditional input devices (e.g., QWERTY keyboard, mouse, etc.) can be too tedious for the fast-paced conditions at a restaurant, alternative means of entering information into the kitchen display system were developed. The bump bar is one such device that has enjoyed widespread use. A bump bar is an input device that has a simplified interface (e.g., relatively few command buttons). A typical bump bar has a button(s) for selecting a particular food order ticket or chit. A bump bar typically also has a button for initiating a "bump," which is an indication that a particular food order is ready to be served to a customer. A bump bar may have other functionality, including a recall button that allows for a previously-bumped order(s) to be returned to the display.

Bump bars may be stand-alone input device (e.g., breakaway boxes) or integrated components of a traditional QWERTY keyboard. Alternatively, and of greater prevalence in recent years, bump bars may be a virtual component of the kitchen display system's touchscreen display. In this configuration, typically the bottom portion of the touchscreen is devoted to a visual representation of a bump bar where the user can select a given function by touching the corresponding button image on the touchscreen.

Regardless of configuration, bump bars share the common feature that they require tactile input from the user (e.g., pushing a button, touching the screen, etc.). This presents a problem in the context of food services because of the importance of cleanliness. The bump bar, as well as other components of the kitchen display system, may become dirty over time, especially upon frequent use by multiple different workers performing different jobs. When a worker touches a bump bar, a touchscreen, or other physical component of the kitchen display system, the worker potentially compromises the cleanliness of his or her hands as well as the touched component. In addition to the cleanliness aspect, the requirement of tactile input in these kitchen display system can be time-consuming despite the fact that they are designed to be more efficient than traditional methods.

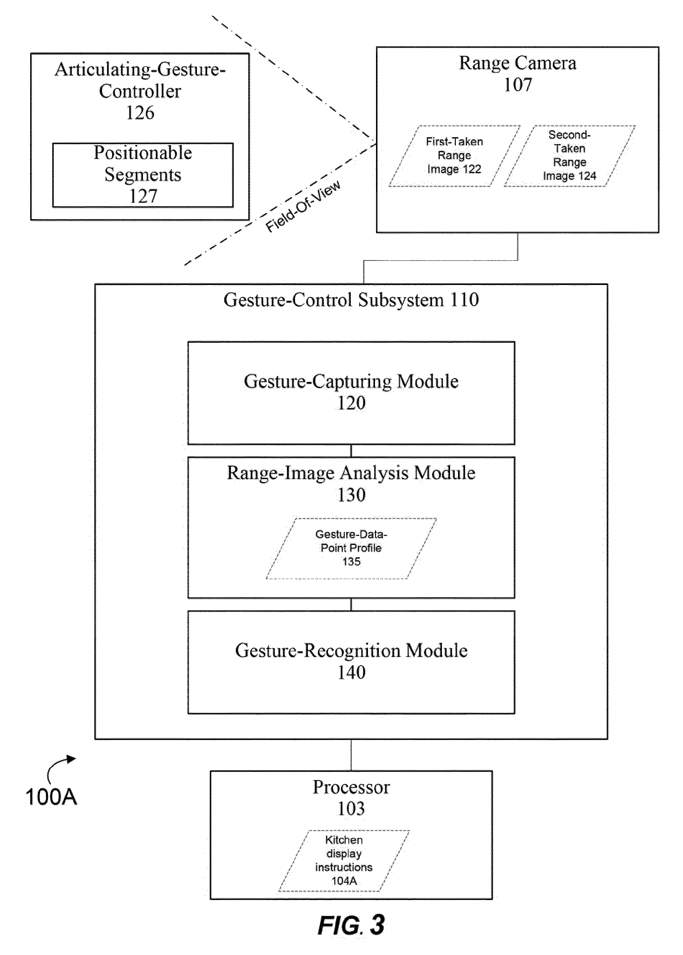

The present disclosure's gesture-controlled kitchen display system allows for servers, food preparers, and other users to input information into the kitchen display system without making physical contact with any component of the kitchen display system. Referring now to Figure 3, the gesture-controlled kitchen display system 100A includes a processor 103 (e.g., computer processor, central processing unit (CPU)), etc.) for executing kitchen display instructions 104A. Typically, kitchen display instructions 104A include computer software that can be executed (e.g., run) by the processor 103 to provide some or all of the functionality of the gesture-controlled kitchen display system 100A. It will be appreciated by a person of ordinary skill in the art that kitchen display instructions may include aspects of computer software, computer hardware, both computer hardware and computer software, or similar computer-readable instructions.

The gesture-controlled kitchen display system 100A according to the present disclosure also includes a range camera 107 having a field of view comprising an area of three-dimensional space. The gesture-controlled kitchen display system 100A also includes a gesture control subsystem 110 in communication with the processor 103 and the range camera 107. The gesture-control subsystem includes a gesture-capturing module 120 and a range-image-analysis module 130. The gesture controlled kitchen display system 100A also includes a gesture-recognition module 140. The gesture-recognition module 140 is configured for (i) receiving the gesture-data-point profile from the range-image-analysis module, (ii) mapping the gesture-data-point profile to a corresponding kitchen-display-system command, and (iii) transmitting the corresponding kitchen-display-system command to the processor 103 for execution of the kitchen-display-system command by the processor 103. A kitchen-display-system command is any command (e.g., directive to the kitchen display system) that can be initiated by a user input.

The gesture-controlled kitchen display system 100A allows a user to interact with the kitchen display system with gestures in lieu of (or in addition to) actions that require tactile interaction. For example, rather than bumping the first three tickets on the display screen by touching all three tickets and then touching the "bump" button, a food preparer could make the gesture corresponding to the bump kitchen-display-system command (e.g., a fist, moving a fist in a circular motion, etc.), followed by holding up three fingers. By way of further example, whereas a traditional bump bar may have arrow buttons allow the user to scroll the screen and/or selection indicator in various directions, a user may instead achieve the same input by pointing a finger up, down, left, right, etc.

In another aspect, the present disclosure embraces a gesture-controlled point-of-sale system. Point-of-sale systems (e.g., POS, electronic point-of-sale, EPOS) are typically computerized systems positioned at the location where a customer makes payment to a merchant in exchange for goods or services. Point-of-sale systems are intended to improve efficiency and accuracy in the purchase transaction, such as by utilizing indicia readers to record an item's purchase price (as opposed to a clerk reading a price tag and manually entering the price). In the restaurant industry, in particular, the use of point-of-sale systems can be problematic. For instance, because of potential contaminants on the surface of the point-of-sale system (e.g., on the touchscreen), a worker may be required to repeatedly wash his or her hands (or don new gloves) every time he or she touches the point-of-sale system. This can result in wasted time and/or wasted money (e.g., through purchasing multiple latex gloves per day). This problem can be alleviated at least in part by utilizing the gesture-controlled point-of-sale system according to the present disclosure.

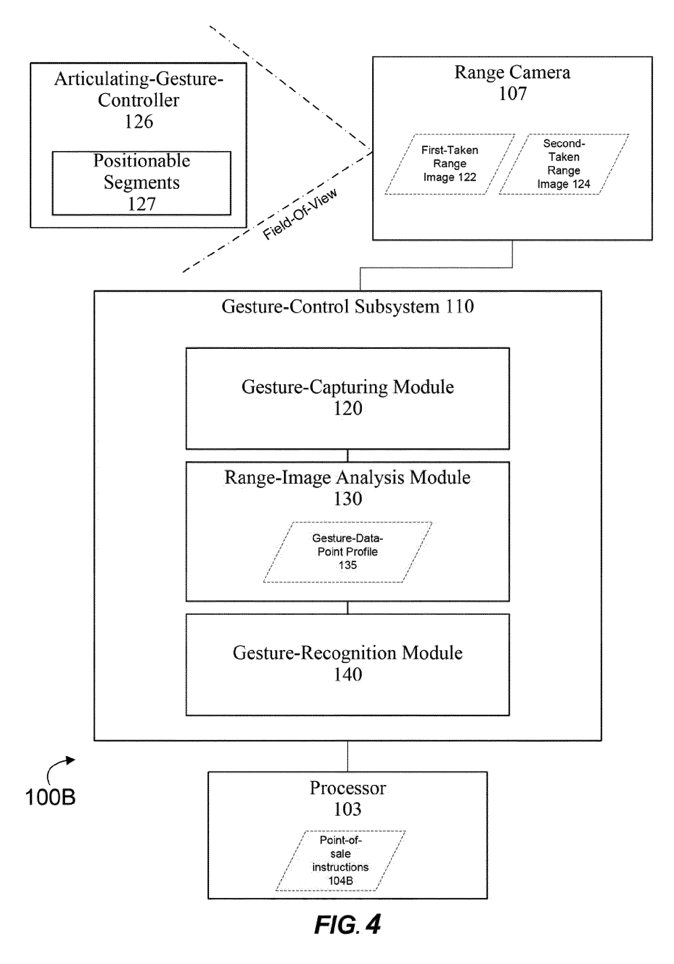

Referring now to Figure 4, the gesture-controlled point-of-sale system 100B includes a processor 103 for executing point-of-sale instructions 104B. Typically, point-of-sale instructions 104B include computer software that can be executed by the processor 103 to provide some or all of the functionality of the gesture-controlled point-of-sale system 100A. For example, point-of-sale instructions may include the executable software code that retrieves the price of a specific item from a database that maintains the price of each item in inventory. It will be appreciated by a person of ordinary skill in the art that point-of-sale instructions may include aspects of computer software, computer hardware, both computer hardware and computer software, or similar computer-readable instructions.

The gesture-controlled point-of-sale system 100B according to the present disclosure also includes a range camera 107 having a field of view comprising an area of three-dimensional space. The gesture-controlled point-of-sale system 100A also includes a gesture control subsystem 110 in communication with the processor 103 and the range camera 107. The gesture-control subsystem includes a gesture-capturing module 120 and a range-image-analysis module 130. The gesture controlled kitchen display system 100A also includes a gesture-recognition module 140. The gesture-recognition module 140 is configured for (i) receiving the gesture-data-point profile from the range-image-analysis module, (ii) mapping the gesture-data-point profile to a corresponding point-of-sale-system command, and (iii) transmitting the corresponding point-of-sale-system command to the processor 103 for execution of the point-of-sale-system command by the processor 103. A point-of-sale-system command is any command (e.g., directive to the point-of-sale system) that can be initiated by a user input.

The gesture-controlled point-of-sale system 100B allows a user to interact with the point-of-sale system with gestures in lieu of (or in addition to) actions that require tactile interaction. For example, rather using a keypad to select menu items (e.g., cheeseburger) purchased by a patron, a user may make the gesture that corresponds to the menu item (e.g., one hand on top of the other to represent a hamburger). Upon making a gesture that causes the gesture-controlled point-of-sale system 100B to provide a total amount due, the patron may initiate payment (e.g., via credit card, NFC-enabled smartphone, etc.). In that scenario, by using gestures, the user does not come into physical contact with the equipment of the gesture-controlled point-of-sale system or the customer's payment method.

In another aspect, the present disclosure embraces a gesture-controlled food preparation system. Commercial food preparation occurs at many levels. Restaurant food preparers cook meals in kitchens, deli workers prepare sandwiches behind deli counters, butchers prepare cuts of meat for purchase by grocers, and so on. With respect to commercial food preparation, an importance is placed upon cleanliness of both the hands of the food preparers as well as the equipment involved in the food preparation (e.g., slicers, cooking utensils, containers, etc.). As such, when a worker comes into physical contact with equipment during food preparation, it may be necessary for the worker to wash his or her hands prior to continuing with food preparation to ensure cleanliness. For example, a deli worker who touches a slicer may have to wash his or her hands before continuing to make a sandwich. This can result in delays for the business and patron.

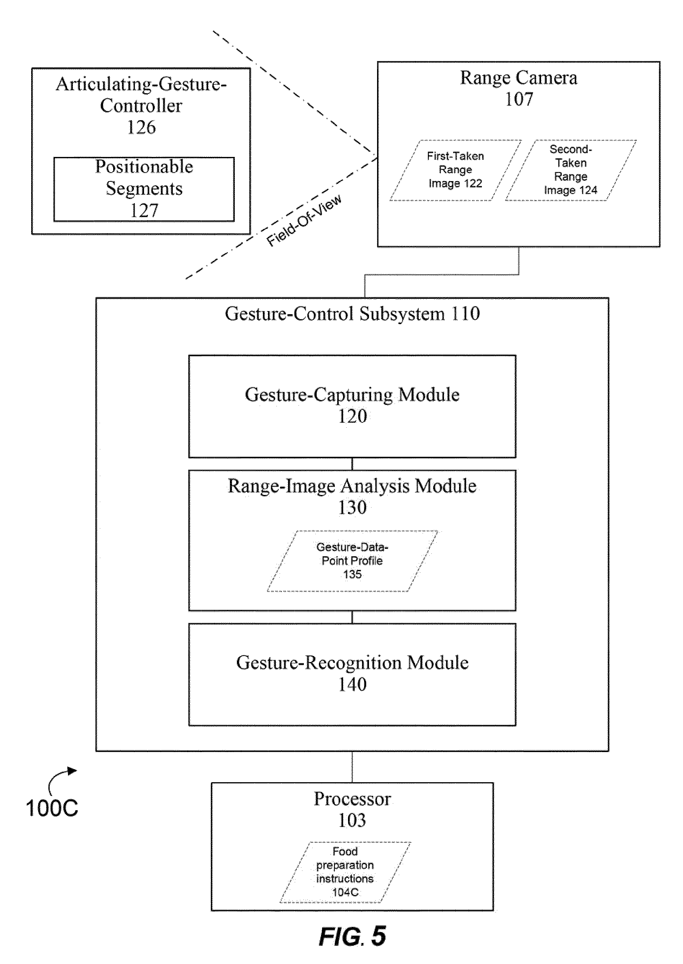

The present disclosure's gesture-controlled food preparation system allows food preparers other users to operate the food preparation system without making physical contact with any component of the food preparation system. In this context, food preparation system refers to any equipment or machinery utilized in food preparation or processing, such as scales, slicers, cookers, ovens, grinders, sausage makers, pasta makers, labelers, packagers (e.g., vacuum sealers), bread slicers, roasters, fryers, heat lamps, etc. Referring now to Figure 5, the gesture-controlled food preparation system 100C includes a processor 103 (e.g., computer processor, central processing unit (CPU)), etc.) for executing food preparation instructions 104C. Typically, food preparation instructions 104C include computer software that can be executed (e.g., run) by the processor 103 to provide some or all of the functionality of the gesture-controlled food preparation system 100C. For example, food preparation instructions may include software that controls the temperature of an oven or the activation of a scale. It will be appreciated by a person of ordinary skill in the art that food preparation instructions may include aspects of computer software, computer hardware, both computer hardware and computer software, or similar computer-readable instructions.

The gesture-controlled food preparation system 100C according to the present disclosure also includes a range camera 107 having a field of view comprising an area of three-dimensional space. The gesture-controlled food preparation system 100C also includes a gesture control subsystem 110 in communication with the processor 103 and the range camera 107. The gesture-control subsystem includes a gesture-capturing module 120 and a range-image-analysis module 130. The gesture controlled food preparation system 100C also includes a gesture-recognition module 140. The gesture-recognition module 140 is configured for (i) receiving the gesture-data-point profile from the range-image-analysis module, (ii) mapping the gesture-data-point profile to a corresponding food-preparation-system command, and (iii) transmitting the corresponding food-preparation-system command to the processor 103 for execution of the kitchen-display-system command by the processor 103. A food-preparation-system command is any command (e.g., directive to the food preparation system) that can be initiated by a user input (e.g., increase oven temperature, open oven door, start/stop slicer, etc.).

The gesture-controlled food preparation system 100C allows a user to interact with the food preparation system with gestures in lieu of (or in addition to) actions that require tactile interaction.

In another aspect, the present disclosure embraces a gesture-controlled equipment-safety system. Particularly in industrial settings, life, limb, and property can be placed in jeopardy when equipment malfunctions or other anomalies are encountered (e.g., a worker becomes entrapped in equipment). To minimize injury to persons and property, many types of equipment (e.g., industrial equipment) incorporate safety systems. These safety systems may include cutoff switches and alarm-activators. These equipment-safety systems may be integral to the industrial equipment, or may be stand-alone systems often found in proximity to the equipment (e.g., halon systems in server rooms). In some instances, it may be difficult for a worker to activate an equipment-safety system in the event of an emergency. For example, the body position of the worker, or the worker's partial incapacitation, may make it difficult to press a cutoff switch.

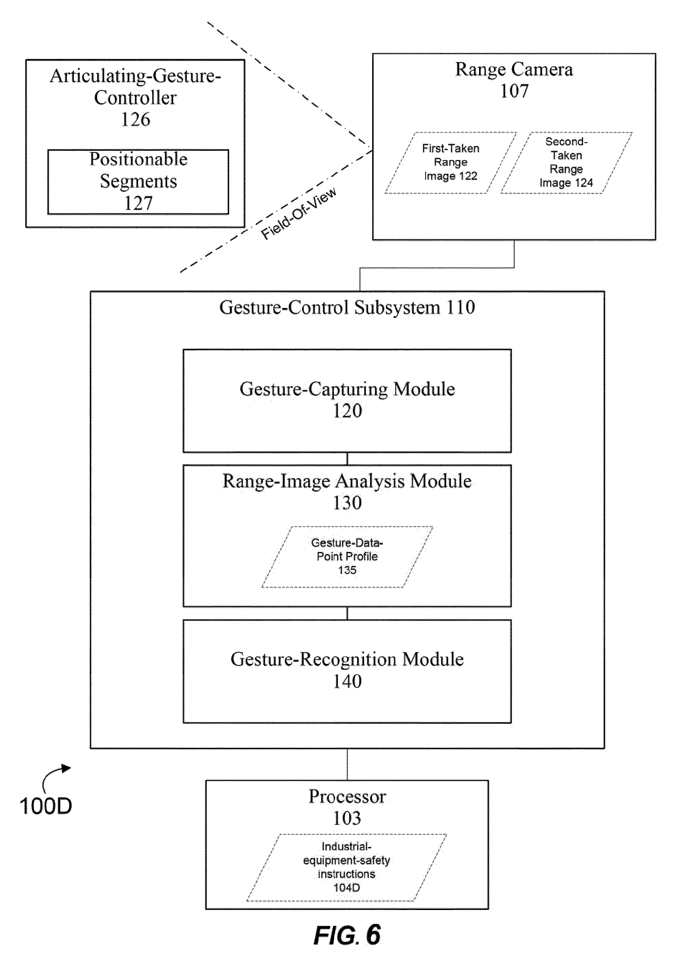

The present disclosure's gesture-controlled equipment-safety system allows industrial workers and other users to operate the equipment-safety system without making physical contact with any component of the equipment-safety system. Referring now to Figure 6, the gesture-controlled equipment-safety system 100D includes a processor 103 (e.g., computer processor, central processing unit (CPU)), etc.) for executing equipment-safety instructions 104D. Typically, equipment-safety instructions 104D include computer software that can be executed by the processor 103 to provide some or all of the functionality of the gesture-controlled equipment-safety system 100D. For example, equipment-safety instructions may include software that controls a cutoff switch, an alarm, a fire suppression system, etc. It will be appreciated by a person of ordinary skill in the art that equipment-safety instructions may include aspects of computer software, computer hardware, both computer hardware and computer software, or similar computer-readable instructions.

The gesture-controlled equipment-safety system 100D according to the present disclosure also includes a range camera 107 having a field of view comprising an area of three-dimensional space. The gesture-controlled equipment-safety system 100D also includes a gesture control subsystem 110 in communication with the processor 103 and the range camera 107. The gesture-control subsystem includes a gesture-capturing module 120 and a range-image-analysis module 130. The gesture controlled equipment-safety system 100D also includes a gesture-recognition module 140. The gesture-recognition module 140 is configured for (i) receiving the gesture-data-point profile from the range-image-analysis module, (ii) mapping the gesture-data-point profile to a corresponding equipment-safety-system command, and (iii) transmitting the corresponding equipment-safety-system command to the processor 103 for execution of the equipment-safety-system command by the processor 103. An equipment-safety-system command is any command (e.g., directive to the equipment-safety system) that can be initiated by a user input (e.g., initiate fire suppression, shut down power, activate safemeasure such as safety guards, etc.). The gesture-controlled equipment-safety system 100D allows a user to interact with the equipment-safety system with gestures in lieu of (or in addition to) actions that require tactile interaction.

Embodiments of the present disclosure that have been described as incorporating a mobile computing device alternatively may incorporate non-mobile (e.g., stationary) computing devices such as desktop computers, point-of-sale terminals, and appliances such as smart televisions or game consoles. The gesture-controlled computer system of the present disclosure may be integrated into another machine, device, and/or system, as in the case of a gesture-controlled point-of-sale system. Alternatively, the gesture-controlled computer system may be an add-on device or system that, when connected, coupled, or integrated with another machine, device, and/or system, provides the gesture-based functionality disclosed herein. In other words, the gesture-controlled computer system disclosed herein may be an independent system capable of being coupled (e.g., communicatively coupled) to a separate machine, device and/or system. The coupling may be achieved in any acceptable manner, including via a Universal Serial Bus interface or similar I/O interface.

Stand-alone embodiments of the present disclosure typically are advantageously configured with plug-and-play capability, thereby alleviating the need for a user to configure the host to interface with the system. For example, when the system is connected to the host, the system enumerates on the PC bus as a standard keyboard or standard mouse. In some embodiments, the present disclosure embraces a gesture software module that can be executed on various computer-based systems to facilitate the control of such computer-based system using gestures. Typically, the gesture software module is operating system agnostic, platform agnostic, and/or range camera agnostic. This allows the gesture software module to be employed substantially universally across varied types of computer-based systems. * * *

To supplement the present disclosure, this application incorporates entirely by reference the following patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237; U.S. Patent No. 8,740,082; U.S. Patent No. 8,740,085; U.S. Patent No. 8,746,563; U.S. Patent No. 8,750,445; U.S. Patent No. 8,752,766; U.S. Patent No. 8,756,059; U.S. Patent No. 8,757,495; U.S. Patent No. 8,760,563; U.S. Patent No. 8,763,909; U.S. Patent No. 8,777,108; U.S. Patent No. 8,777,109; U.S. Patent No. 8,779,898; U.S. Patent No. 8,781,520; U.S. Patent No. 8,783,573; U.S. Patent No. 8,789,757; U.S. Patent No. 8,789,758; U.S. Patent No. 8,789,759; U.S. Patent No. 8,794,520; U.S. Patent No. 8,794,522; U.S. Patent No. 8,794,525; U.S. Patent No. 8,794,526; U.S. Patent No. 8,798,367; U.S. Patent No. 8,807,431; U.S. Patent No. 8,807,432; U.S. Patent No. 8,820,630; U.S. Patent No. 8,822,848; U.S. Patent No. 8,824,692; U.S. Patent No. 8,824,696; U.S. Patent No. 8,842,849; U.S. Patent No. 8,844,822; U.S. Patent No. 8,844,823; U.S. Patent No. 8,849,019; U.S. Patent No. 8,851,383; U.S. Patent No. 8,854,633; U.S. Patent No. 8,866,963; U.S. Patent No. 8,868,421; U.S. Patent No. 8,868,519; U.S. Patent No. 8,868,802; U.S. Patent No. 8,868,803; U.S. Patent No. 8,870,074; U.S. Patent No. 8,879,639; U.S. Patent No. 8,880,426; U.S. Patent No. 8,881,983; U.S. Patent No. 8,881,987; U.S. Patent No. 8,903,172; U.S. Patent No. 8,908,995; U.S. Patent No. 8,910,870; U.S. Patent No. 8,910,875; U.S. Patent No. 8,914,290; U.S. Patent No. 8,914,788; U.S. Patent No. 8,915,439; U.S. Patent No. 8,915,444; U.S. Patent No. 8,916,789; U.S. Patent No. 8,918,250; U.S. Patent No. 8,918,564; U.S. Patent No. 8,925,818; U.S. Patent No. 8,939,374; U.S. Patent No. 8,942,480; U.S. Patent No. 8,944,313; U.S. Patent No. 8,944,327; U.S. Patent No. 8,944,332; U.S. Patent No. 8,950,678; U.S. Patent No. 8,967,468; U.S. Patent No. 8,971,346; U.S. Patent No. 8,976,030; U.S. Patent No. 8,976,368; U.S. Patent No. 8,978,981; U.S. Patent No. 8,978,983; U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng et *al.);*
U.S. Patent Application No. 29/458,405 for an *Electronic Device,* filed June 19, 2013 (Fitch et *al.*);
U.S. Patent Application No. 29/459,620 for an *Electronic Device Enclosure*, filed July 2, 2013 (London *et al.);*
U.S. Patent Application No. 29/468,118 for an *Electronic Device Case*, filed September 26, 2013 (Oberpriller *et al*.);
U.S. Patent Application No. 14/150,393 for *Indicia-reader Having Unitary Construction Scanner*, filed January 8, 2014 (Colavito *et al*.);
U.S. Patent Application No. 14/200,405 for *Indicia Reader for Size-Limited Applications* filed March 7, 2014 (Feng *et al.*);
U.S. Patent Application No. 14/231,898 for *Hand-Mounted Indicia-Reading Device with Finger Motion Triggering* filed April 1, 2014 (Van Horn *et al*.);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley et *al.);*
U.S. Patent Application No. 14/277, 337 *for MULTIPURPOSE OPTICAL READER, filed May 14, 2014 (Jovanovski et al.);*
U.S. Patent Application No. 14/283,282 *for TERMINAL HAVING ILLUMINATION AND FOCUS CONTROL filed May 21, 2014 (Liu* et *al.);*
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier); U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.); U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.); U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.); U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.);and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A gesture-controlled computer system, comprising:
a mobile computing device;
a range camera having a field-of-view comprising an area of three-dimensional space;
a gesture-control subsystem in communication with the mobile computing device and the range camera, comprising:
a gesture-capturing module configured for acquiring a first-takenrange image of anarticulating-gesture-controller during the performance of a gesture;
a range-image-analysis module configured forgenerating a gesture-data-point profile derived at least in part from the first-taken range image, the gesture-data-point profile including information regarding a plurality of gesture data points, including information about the relative position of the gesture data points; and
a gesture-recognition module configured for (i) receiving the gesture-data-point profile from the range-image-analysis module, (ii) mapping the gesture-data-point profile to a corresponding device command, and (iii) transmitting the corresponding device command to the mobile computing device for execution of the device command by the mobile computing device.

2. The gesture-controlled computer system of claim 1:
wherein the gesture-capturing module is configured for acquiring a second-taken range image of the articulating-gesture-controller during the performance of a gesture; and
wherein the range-image-analysis module is configured for including in the gesture-data-point profile information regarding the relative motion of the plurality of gesture data points, the relative motion being determinedat least in part by comparing the first-taken range image to the second-taken range image.

3. The gesture-controlled computer system of claim 2, wherein the information regarding the relative motion of the plurality of gesture data points includes the direction of movement and velocity of the plurality of gesture data points.

4. The gesture-controlled computer system of claim 3, wherein the gesture-data-point profile includes information regarding the orientation of the articulating-gesture-controller.

5. The gesture-controlled computer system of claim 4, wherein the gesture-data-point profile includes information regarding the positional configuration of a plurality of positionable segments of the articulating-gesture-controller.

6. The gesture-controlled computer system of claim 4, wherein the gesture-data-point profile includes information regarding the positional configuration of at least three positionable segments of the articulating-gesture-controller.

7. The gesture-controlled computer system of claim 4, wherein the gesture-data-point profile includes information regarding the positional configuration of at least four positionable segments of the articulating-gesture-controller.

8. The gesture-controlled computer system of claim 4, wherein the gesture-data-point profile includes information regarding the positional configuration of at least five positionable segments of the articulating-gesture-controller.

9. The gesture-controlled computer system of claim 5, wherein the articulating-gesture-controller is a human hand and each of the plurality of positionable segments is a different finger of the human hand.

10. The gesture-controlled computer system of claim 5, wherein the articulating-gesture-controller is a portion of a human upper torso, and each of the plurality of positionable segmentscorresponds to a different one of either an upper arm, a lower arm, a hand, or one of the fingers of the hand.

11. The gesture-controlled computer system of claim 2, wherein the gesture-control subsystem is configured for performing an action associated with a gesture when the user performs an execution signal.

12. A method for controlling a mobile computer device, comprising:
presenting within a range camera's field-of-view a gesture using an articulating-gesture-controller;
acquiring a first-taken range image of the articulating-gesture-controller;
generating a gesture-data-point profile derived at least in part from the first-taken range image, the gesture-data-point profile including information regarding a plurality of gesture data points, including information about the relative position of the gesture data points;
mapping the gesture-data-point profile to a corresponding device command; and
transmitting the corresponding device command to the mobile computing device for execution of the device command by the mobile computing device.

13. The method of claim 12, comprising:
acquiring a second-taken range image of the articulating-gesture-controller during the performance of a gesture; and
including in the gesture-data-point profile information regarding the relative motion of the plurality of gesture data points, the relative motion being determined at least in part by comparing the first-taken range image to the second-taken range image.

14. The method of claim 13, wherein the information regarding the relative motion of the plurality of gesture data points includes the direction of movement and velocity of the plurality of gesture data points.

15. The method of claim 14, wherein the gesture-data-point profile includes information regarding the orientation of the articulating-gesture-controller.
